# EUROPEAN PATENT SPECIFICATION

(11) **EP 0 722 384 B1**
(45) Date of publication and mention of the grant of the patent: **01.03.2000**
(21) Application number: 95928462.1
(22) Date of filing: 25.07.1995
(51) Int. Cl.: B29C 35/02

(54) **IMPROVED MACHINE FOR MANUFACTURING VULCANIZED RUBBER HOSES**
VORRICHTUNG ZUM HERSTELLEN VON VULKANISIERTEN GUMMISCHLÄUCHEN
MACHINE AMELIOREE PERMETTANT DE FABRIQUER DES TUYAUX DE CAOUTCHOUC VULCANISES

(30) Priority: 05.08.1994 IT PD940085 U
(43) Date of publication of application: 24.07.1996
(73) Proprietor: DEREGIBUS A. & A. S.P.A., I-35030 Saccolongo (Padova) (IT)
(72) Inventor: DEREGIBUS, Andrea, I-35143 Padova (IT)
(74) Representative: Modiano, Guido, Dr.-Ing.
(86) International application number: EP9502941
(87) International publication number: WO9604118

(56) References cited:
- EP-A- 0 095 631
- EP-A- 0 151 238
- EP-A- 0 281 016
- EP-A- 0 410 367
- FR-A- 1 090 209
- FR-A- 1 146 784

## Description

The present invention relates to an improved machine for manufacturing vulcanized rubber hoses, of the type as defined in the preamble of the appended claim 1 and as disclosed for example in EP-A-0 410 367.

Presently, for the production of vulcanized rubber hoses a machine is used which comprises a pair of heads laying opposite to mandrels which rotate two tubular cores supported by bearing elements with fixed rollers on a supporting frame.

Alongside the tubular cores there is provided a box- type openable furnace, heat insulated by internal padding with fiberglass or other equivalent material, adapted to contain the cores when wrapped with the hoses to be vulcanized and after their unloading carried out by transferring means.

The heads of the furnace are provided with terminal boards for supplying electric power to the cores and heating them by Joule effect.

Means are provided for picking up the cores from the furnace.

The core wrapping with coils of material to be used for obtaining the hoses is carried out by means of a carriage, slidable on rails laying on ground and parallel to said cores, which carriage supports swifts, bands adapted to define on the cores said coils being unwound therefrom.

The method adopted in this machine for producing vulcanized rubber hoses provides, in a first step, the spiral winding of several rubber bands and possibly of other materials on two cores made of electroconductive material.

As a last layer a bandage is wrapped, usually made of nylon, which is wetted.

Once this step of winding the bands constituting the hose and the wetted bandage is concluded, the cores are placed inside the furnace, with the help of the handling means.

To the heads of the cores projecting from the furnace, electrodes are applied through which an electric current flux crosses and heats the cores by Joule effect.

Such a core heating determines the vulcanization of the rubber hoses.

Furthermore, the heat generated by drying the wetted bandages makes these to exert, by shrinking, a uniform compression on the external surface of the tubes thus avoiding, during the vulcanization, formation of internal blisters.

The type of furnaces used up to now, though achieving the intended purpose, has a drawback resulting from the fact that the water with which the bandage was wetted evaporates due to the effect of the heat produced and, by crossing the heat insulation layer, condenses on the internal surface of the container.

The insulation layer is thus always wet and in rather short times degrades and rots.

Once the insulation layer has rotten, and its insulating properties are lost, it must be replaced at an unwanted expenditure of economical resources and time.

The insulation being wetted, its insulating properties are consequently impaired.

Further to this, even the metal of which the container is made, being itself wetted by the condensing water, degrades and rusts, consequently loosing in time its chemical-physical characteristics.

Cores of various diameters to be used in the machine are presently stowed, still in the workshop, but in an area not close to the machine itself.

This requests for the workshop to be provided with a hoist system for handling the cores.

The main object of this invention is to provide a machine for manufacturing vulcanized rubber hoses with a furnace that solves the above mentioned problems of the known types.

Related to the main object, an aim of the present invention is to provide a furnace of utmost constructive simplicity as well as of a good thermic and structural reliability.

Another aim of the present invention is to provide a furnace having costs similar to those of the existing furnaces.

A further aim of the present invention is to provide a furnace which accomplishes a vulcanization in times and with a quality which are competitive with respect to known furnaces.

A further aim of the invention is to provide a furnace, the use whereof does not require skilled labour.

It is still another aim of the invention to provide a furnace obtainable with known technologies.

Another important aim is to realize a machine which eliminates the use of hoists for handling the cores.

In accordance with the invention, there is provided an improved machine for manufacturing vulcanized rubber hoses as defined in the appended claims.

Further features and advantages of the present invention will become apparent from the detailed description of an embodiment thereof illustrated only by way of non-limitative example in the accompanying drawings, wherein:
figure 1 is a schematic front view of the machine;
figure 2 is a schematic side view of the machine;
figure 3 is a perspective view of a head zone of the machine furnace;
figure 4 is cross-section of the furnace.

Referring to the above figures, a machine for manufacturing vulcanized rubber hoses is generally designated by the reference numeral 10 and comprises two heads, respectively 11 and 12, of which at least one is motorized.

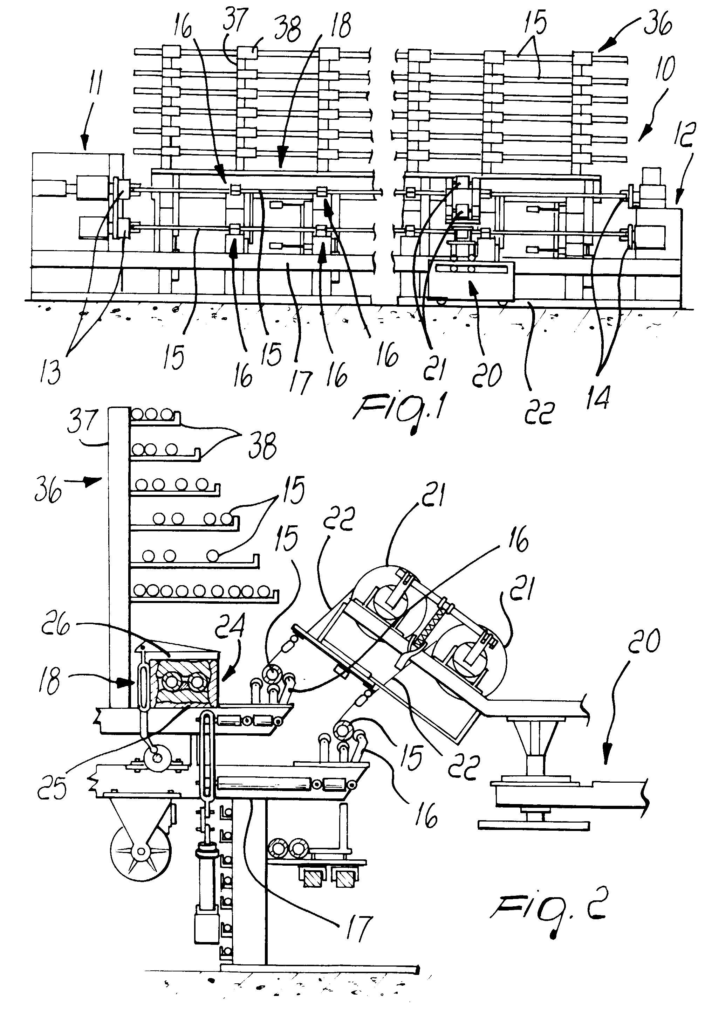

Each of the heads is provided with two mandrels, which in figure 1 are indicated respectively: two first ones with 13, and two second ones with 14.

The ends of two metallic tubular cores 15 are gripped with the mandrels 13 and 14.

Each of the mandrels is suitably kinematically connected to a driving motor, not shown, connected to the head 11.

The two metallic cores 15, which are placed on parallel horizontal axes at different heights with respect to the floor, are supported by supports with rollers 16 spaced out to avoid excessive bendings during working, and secured to a frame 17 of metal section bars.

Each support 16 comprises three rollers located parallel to the corresponding core 15 to allow bearing and rolling of the core with low friction and to consequently allow the winding without hindrance of fabric and raw rubber coils for making the hoses.

Alongside said cores 15 a heat insulated furnace 18 is provided.

The machine 10 is also provided with transfer means, not shown for simplicity, adapted to pick up the wrapped cores 15 and to discharge the inside of the furnace 18, and with means for picking up, also not shown for simplicity, the cores 15 from the furnace 18, after the vulcanization is carried out by Joule effect, with the help of electric terminal boards, also not shown.

Said cores 15 are located in front of a longitudinal rail 19 secured on the ground, a carriage 20 transporting swifts 21 being slidable theron, from which swifts bands 22 are unwound which are adapted to simultaneously wrap said cores 15.

The furnace 18 comprises a container 24 substantially of the openable box-type, made of metallic material.

The container 24, in turn, comprises a body 25 which is open upwardly and at the ends, and a lid 26 movable to open and close the body 25 by action of handling means 27 constituted for instance by hinges, levers and pistons.

The body 25 is maintained in position by supporting and handling means 28.

According to the invention, the body 25 at its bottom and sides, and the lid 26 have a plurality of mutually offset, through holes 29 arranged on lines.

Such holes 29 connect the inside of the container 24 with the exterior.

The container 24 has internal surfaces padded with pads 30 of insulating material of the fiberglass type or equivalent materials, which can be covered with fabric.

Inside the container 24, are located during the vulcanizing step, the two cores 15 of electroconductive material which provide supports for the corresponding hoses 31 consisting of several spiral wound layers of raw rubber bands and of other possible materials.

The last layer of each of the hoses 31 consists of a bandage 32 wetted with water.

Electrodes 35 are secured through respective plier connectors 34 to the heads 33 of the cores 15.

Such electrodes cause the heating of the cores 15 by Joule effect.

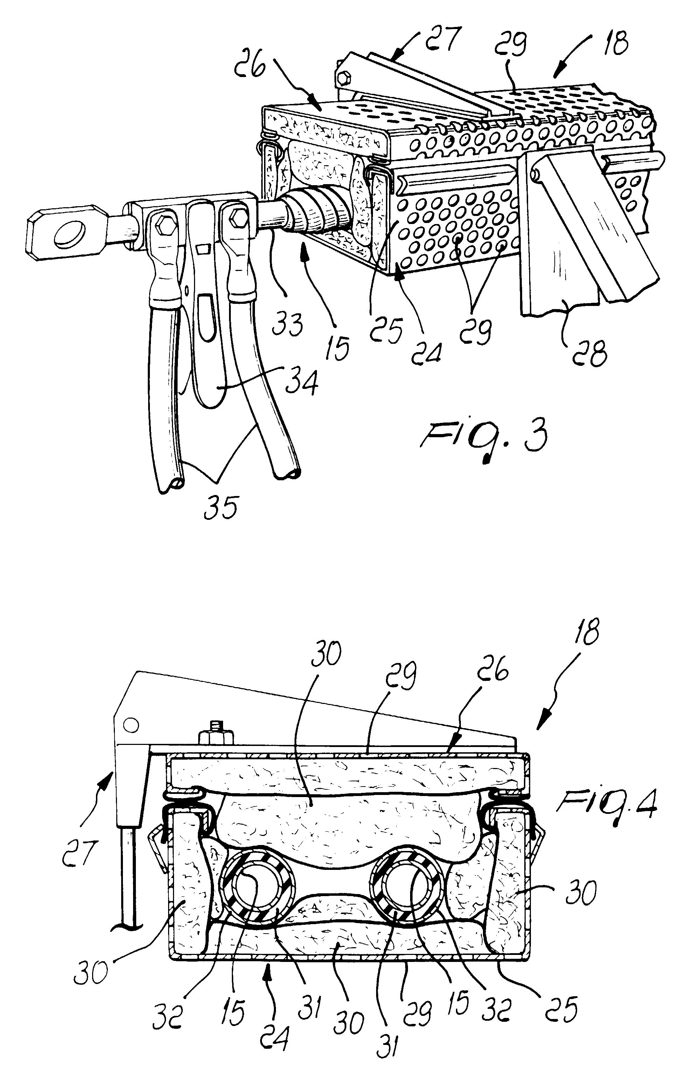

Referring in particular now to the figures 1 and 2, a core rack 36 is shown therein, which is integrated in the machine structure at an upper region to the furnace 18 and substantially consists of uprights 37, suitably spaced one from the other, and connected to cantilevered bearing elements 38.

It has been ascertained in practice how the intended aims have been achieved, in particular by boring the container 24, the condensate, by effect of the heat generated inside the furnace 18, is evaporated, thus leaving perfectly dry the heat insulation layer.

Thus, a remarkable increase of the insulation material life has obviously been reached, cutting down in this way both the cost for its replacement and the expenditure of time and money related to the inevitable stop of the production.

Furthermore the insulation characteristics are not impaired, assuring in this way the constancy in time of the process parameters.

Finally it is to be noted that, by locating the core rack 36 on the machine, there is no need to provide hoists for handling the cores any more, thus simplifying considerably the operations involving such cores.

The present invention is susceptible of modifications and variations all falling within the scope of the inventive concept, for example, the container may be made from a metallic grate.

Furthermore all the details are replaceable with other technically equivalent elements.

In practice, the materials employed, as long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Machine (10) for manufacturing vulcanized rubber hoses of the type comprising a pair of heads (11,12) laying opposite to mandrels (13,14) which rotate two or more tubular cores (15) supported by bearing elements with fixed rollings (16) on a supporting frame (17), alongside said tubular cores (15) a box-type openable heat insulated furnace (18) being provided, adapted to contain the cores (15) wrapped by the hoses (31) to be vulcanized and unloaded by transferring means, said furnace (18) comprising a box-type container (24) having an inside, and insulating material (30) arranged inside the container (24) such that when the cores (15) are arranged inside the container (24) said insulating material (30) is arranged between said cores (15) and wall portions of said container (24), the heads of said furnace (18) having means (34,35) for supplying electric power to the cores (15), means for picking up the cores (15) from said furnace (18), said machine being **characterized in that** at least part of the bottom and of the sides of said container (24) are provided with through holes (29) such that moisture from said cores (15) may transfer externally outside said container (24) from the inside of said container (24).

2. Machine according to claim 1, characterized in that said container (24) comprises a body (25) closeable by a lid (26), said through holes (29) being also provided in at least part of said lid (26).

3. Machine according to one or more of the preceding claims, characterized in that said holes (29) of said container (24) are arranged mutually offset on parallel lines.

4. Machine according to one or more of the preceding claims, characterized in that said box-type container (24) is made of bored sheet metal or metallic grate.

5. Machine according to one or more of the preceding claims, characterized in that said insulating material (30) is covered with fabric.

6. Machine according to one or more of the preceding claims, characterized in that it comprises, integrated in its structure, a core rack (36).

7. Machine according to claim 6, characterized in that said rack (36) is placed at an upper region to said furnace (18).

8. Machine according to claim 6, characterized in that said rack (36) comprises uprights (37) supporting cantilevered bearing elements (38).

## Patentansprüche

1. Maschine (10) zur Herstellung von vulkanisierten Gummischläuchen von der Art, die ein Paar von Köpfen (11, 12) umfasst, die Dornen (13, 14) gegenüberliegen, welche zwei oder mehr, durch Lageremente mit an einem Gestell (17) befindlichen stationären Rollen (16) gestützte, rohrförmige Kerne (15) drehen, wobei längs der rohrförmigen Kerne (15) ein kastenartiger, zu öffnender, wärmeisolierter Ofen (18) vorhanden ist, der zur Aufnahme der mit den zu vulkanisierenden Schläuchen umwickelten, durch Transfermittel abnehmbaren Kerne (15) angepasst ist, wobei der Ofen (18) einen kastenartigen, ein Inneres aufweisenden Behälter (24) und Isoliermaterial (30) umfasst, das im Behälter (24) derart angeordnet ist, dass, wenn die Kerne (15) im Behälter (24) angeordnet sind, das Isoliermaterial (30) zwischen den Kernen (15) und Wandabschnitten des Behälters (24) angeordnet ist, wobei die Köpfe des Ofens (18) Mittel (34, 35) zum Zuführen von elektrischem Strom zu den Kernen (15) aufweisen, und Mittel zum Abnehmen der Kerne (15) von dem Ofen (18) umfasst, wobei die Maschine **dadurch gekennzeichnet** ist, dass wenigstens ein Teil des Bodens und der Seiten des Behälters (24) mit Durchgangslöchern (29) versehen sind, so dass Feuchtigkeit von den Kernen (15) vom Innern des Behälters (24) zur Außenseite des Behälters (24) abgeführt werden kann.

2. Maschine nach Anspruch 1, **dadurch gekennzeichnet, dass** der Behälter (24) einen durch einen Deckel (26) verschließbaren Körper (25) umfasst, wobei die Durchgangslöcher (29) auch in wenigstens einem Teil des Deckels (26) vorhanden sind.

3. Maschine nach einem oder mehreren der vorhergehenden Ansprüche, **dadurch gekennzeichnet, dass** die Löcher (29) des Behälters (24) zueinander versetzt in parallelen Reihen angeordnet sind.

4. Maschine nach einem oder mehreren der vorhergehenden Ansprüche, **dadurch gekennzeichnet, dass** der kastenartige Behälter (24) aus Lochblech oder einem Metallgitter besteht.

5. Maschine nach einem oder mehreren der vorhergehenden Ansprüche, **dadurch gekennzeichnet, dass** das Isoliermaterial (30) mit einem Gewebe bedeckt ist.

6. Maschine nach einem oder mehreren der vorhergehenden Ansprüche, **dadurch gekennzeichnet, dass** sie ein in ihre Struktur integriertes Regal (36) für Kerne umfasst.

7. Maschine nach Anspruch 6, **dadurch gekennzeichnet, dass** das Regal (36) in einem gegenüber dem Ofen (18) oberen Bereich liegt.

8. Maschine nach Anspruch 6, **dadurch gekennzeichnet, dass** das Regal (36) aufrechtstehende Stützen (37) umfasst, die auskragende Lagerelemente (38) tragen.

## Revendications

1. Machine (10) de fabrication de tuyaux souples en caoutchouc vulcanisé, du type comprenant une paire de têtes (11, 12) se trouvant à l'opposé de mandrins (13, 14) qui font tourner deux ou plusieurs noyaux tubulaires (15) supportés par des éléments de support avec des roulements fixes (16) sur un cadre d'appui (17), le long desdits noyaux tubulaires (15) étant prévu un four (18) du type caisson, ouvrant, calorifuge, conçu pour contenir les noyaux (15) enveloppés par les tuyaux souples (31) à vulcaniser et déchargés par des moyens de transfert, ledit four (18) comprenant un conteneur (24) du type caisson ayant un matériau (30) interne et isolant, disposé à l'intérieur du conteneur (24), de sorte que lorsque les noyaux (15) sont disposés à l'intérieur du conteneur (24), ledit matériau isolant (30) est disposé entre lesdits noyaux (15) et les portions de paroi dudit conteneur (24), les têtes dudit four (18) ayant des moyens (34, 35) pour fournir de l'énergie électrique aux noyaux (15), des moyens pour prendre les noyaux (15) depuis ledit four (18), ladite machine étant caractérisée en ce qu'au moins une partie du fond et des côtés dudit conteneur (24) sont munis de trous de passage (29), de sorte que l'humidité provenant desdits noyaux (15) peut être transférée extérieurement, à l'extérieur dudit conteneur (24), depuis l'intérieur dudit conteneur (24).

2. Machine selon la revendication 1, caractérisée en ce que ledit conteneur (24) comprend un corps (25) susceptible d'être fermé par un couvercle (26), lesdits trous de passage (29) étant également prévus dans au moins une partie dudit couvercle (26).

3. Machine selon une ou plusieurs des revendications précédentes, caractérisée en ce que lesdits trous (29) dudit conteneur (24) sont disposés de façon mutuellement décalée sur des lignes parallèles.

4. Machine selon une ou plusieurs des revendications précédentes, caractérisée en ce que ledit conteneur de type caisson (24) est fait d'une feuille perforée en métal ou d'une grille métallique.

5. Machine selon une ou plusieurs des revendications précédentes, caractérisée en ce que ledit matériau isolant (30) est couvert d'un tissu.

6. Machine selon une ou plusieurs des revendications précédentes, caractérisée en ce qu'elle comprend, intégrée dans sa structure, une étagère (36) pour noyaux.

7. Machine selon la revendication 6, caractérisée en ce que ladite étagère (36) est placée au niveau d'une région supérieure audit four (18).

8. Machine selon la revendication 6, caractérisée en ce que ladite étagère (36) comprend des montants (37) supportant des éléments de support (38) en porte à faux.
